# EUROPÄISCHE PATENTSCHRIFT

(11) **EP 3 274 072 B1**
(45) Veröffentlichungstag und Bekanntmachung des Hinweises auf die Patenterteilung: **21.08.2024**
(21) Anmeldenummer: 16711235.8
(22) Anmeldetag: 18.03.2016
(51) Int. Cl.: B01D 53/04, B01J 47/00, B01D 46/00

(54) **LUFTFILTER MIT EINEM MEHRLAGIGEN FILTERMATERIAL**
AIR FILTER COMPRISING A MULTILAYER FILTER MATERIAL
FILTRE À AIR COMPRENANT UN MATÉRIAU FILTRANT MULTICOUCHES

(30) Priorität: 26.03.2015 DE 102015205551
(43) Veröffentlichungstag der Anmeldung: 31.01.2018
(73) Patentinhaber: Mahle International GmbH, 70376 Stuttgart (DE)
(72) Erfinder: MERZ, Katharina, 70374 Stuttgart (DE); MICHAEL, Markus, 74360 Ilsfeld (DE); RENZ, Birgit, 71672 Marbach (DE)
(74) Vertreter: BRP Renaud & Partner mbB Rechtsanwälte Patentanwälte Steuerberater
(86) Internationale Anmeldenummer: PCT/EP2016/055957
(87) Internationale Veröffentlichungsnummer: WO 2016/150851

(56) Entgegenhaltungen:
- WO-A1-01/70391
- DE-A1- 102012 007 503
- DE-A1- 19 817 703
- JP-A- H10 230 118
- US-A- 5 714 126

## Beschreibung

Die vorliegende Erfindung betrifft ein mehrlagiges Filtermaterial für ein Innenraumluftfilterelement eines Fahrzeugs. Die Erfindung betrifft außerdem ein Innenraumluftfilterelement für eine Klimatisierungsanlage eines Fahrzeugs, das mit Hilfe eines derartigen mehrlagigen Filtermaterials hergestellt ist. Schließlich betrifft die vorliegende Erfindung eine Klimatisierungsanlage für ein Fahrzeug, die mit wenigstens einem derartigen Innenraumluftfilterelement ausgestattet ist.

Bei Fahrzeugen, insbesondere bei Straßenfahrzeugen, besteht ein Bedarf, einen Fahrzeuginnenraum, vorzugsweise einen Passagierraum, mit sauberer Luft zu versorgen. Die Luftversorgung des Fahrzeuginnenraums erfolgt üblicherweise mit Hilfe einer Klimatisierungsanlage, die Luft aus dem Innenraum ansaugt, mit Hilfe eines Innenraumluftfilters reinigt und dem Innenraum zurückführt (Umluftbetrieb) oder frische Luft aus der Umgebung ansaugt und mit Hilfe des Innenraumluftfilters reinigt und dem Innenraum zuführt (Frischluftbetrieb). Ebenso sind bei modernen Klimatisierungsanlagen beliebige Zwischenstellungen zwischen einem derartigen Umluftbetrieb und einem derartigen Frischluftbetrieb möglich (Mischluftbetrieb). Während ein derartiges Innenraumluftfilter ursprünglich nur grobe Verunreinigungen aus der Luft herausfiltern musste, sind die Anforderungen an derartige Innenraumluftfilter und die dabei zum Einsatz kommenden Filtermaterialien ständig gestiegen. Zwischenzeitlich soll mit Hilfe eines Innenraumluftfilters eine Reinigung der angesaugten Luft von Pollen, Feinstaub und Gerüchen erreicht werden. Insbesondere die Entfernung von Geruchsstoffen aus der angesaugten Luft bereitet dabei Schwierigkeiten, da unterschiedliche Geruchsstoffe auch unterschiedliche Filtermaterialien benötigen. Wenn jedoch für eine ansteigende Anzahl an unterschiedlichen Geruchsstoffen eine entsprechende Anzahl verschiedener Filtermaterialien erforderlich wird, steigt der Durchströmungswiderstand des Luftfilters, was eine ökonomische Betriebsweise der Klimatisierungsanlage behindert. Es kommen daher bevorzugt mehrlagige Filtermaterialien zum Einsatz, die stets einen optimierten Kompromiss für die jeweilige Reinigungsaufgabe repräsentieren. Sofern ein derartiges Luftfilter sowohl partikuläre Verunreinigungen, also feste und/oder flüssige Verunreinigungen, als auch gasförmige Verunreinigungen aus der Luft herausfiltern kann, wird ein derartiges Luftfilter häufig auch als Hybridfilter bezeichnet. Derartige Hybridfilter werden gerne über Lastenhefte spezifiziert, die in der Regel folgende Gase berücksichtigen: n-Butan, Toluol, Schwefeldioxid, Stickoxide, Ozon. Diese Hybridfilter sind beispielsweise gemäß ISO Standard 11155 Teil 2 spezifiziert. Diese Standard-Spezifizierung repräsentiert jedoch Geruchsbelastungen, die in europäischen Ballungszentren vor etwa 30 Jahren ermittelt wurden. Heutige Außenluftbedingungen, wie sie in den Ballungszentren in Europa und vor allem in Asien vorliegen, unterscheiden sich jedoch von diesen früheren Außenluftbedingungen. Beispielsweise kann die Umgebungsluft heutzutage Amine und Aldehyde enthalten, die Gerüche transportieren und die von den vorstehend genannten Hybridfiltern gemäß Standard-Spezifikation nicht oder nur unzureichend gefiltert werden können.

Aus der DE 10 2005 016 677 A1 ist ein Filterelement mit einem mehrlagigen Filtermaterial bekannt, bei dem eine anströmseitig angeordnete Aktivlage mit Aktivkohlefasern vorgesehen ist, an die sich abströmseitig eine Adsorberlage mit körnigen Adsorbentien anschließt. An diese Adsorberlage kann sich abströmseitig eine weitere Aktivlage mit Aktivkohlefasern anschließen. Die hierbei verwendeten Adsorbentien können Aktivkohle, Zeolithe, Cyclodextrine, Silikate, Ionentauscher und Alumosilikate umfassen.

Aus der DE 10 2012 007 503 A1 ist ein anderes adsorptives Filtermedium bekannt, bei dem mehrere erste Filterlagen mit einem ersten Adsorptionsstoff und mehrere von den ersten Filterlagen verschiedene zweite Filterlagen mit einem zweiten Adsorptionsstoff vorgesehen sind, die einander abwechseln und unterschiedliche Durchströmungswiderstände bzw. Druckverluste aufweisen.

Ein weiteres adsorptives Filtermaterial ist aus der DE 10 2009 021 020 A1 bekannt und enthält ein Austauscherharz, das mit Metallkationen beladen ist.

Aus der WO 01/70391 A1 ist ein Filtermaterial bekannt, das eine Aktivlage, die nicht-imprägnierte Aktivkohlepartikel aufweist, eine Imprägnierlage, die imprägnierte Aktivkohlepartikel aufweist, und eine Ionentauschlage aufweist, die Ionentauscherpartikel aufweist. Bei diesem bekannten Filtermaterial ist die Ionentauschlage zwischen der Aktivlage und der Imprägnierlage angeordnet.

Die vorliegende Erfindung beschäftigt sich mit dem Problem, für ein Filtermaterial der eingangs genannten Art bzw. für ein damit ausgestattetes Innenraumluftfilterelement bzw. für eine damit ausgestattete Klimatisierungsanlage eine verbesserte Ausführungsform anzugeben, die sich insbesondere durch eine effiziente Reinigungswirkung für eine Vielzahl unterschiedlicher Geruchsstoffe bei vergleichsweise geringem Durchströmungswiderstand auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Filtermaterial mit wenigstens drei Lagen auszustatten, die in der Durchströmungsrichtung des Filtermaterials aneinander anliegen bzw. aufeinander geschichtet sind. Hierbei handelt es sich erfindungsgemäß zumindest um eine Aktivlage, die nicht-imprägnierte Aktivkohlepartikel aufweist, eine Imprägnierlage, die imprägnierte Aktivkohlepartikel aufweist, und eine Ionentauschlage, die lonentauscherpartikel aufweist. Es werden somit für das mehrlagige Filtermaterial zumindest drei Funktionslagen vorgeschlagen, die sich durch unterschiedliche Reinigungsfunktionen voneinander unterscheiden. Diese Reinigungsfunktionen bzw. Funktionslagen sind erfindungsgemäß gezielt so aufeinander abgestimmt, dass sich eine besonders effiziente Reinigungswirkung für eine Vielzahl von Geruchsstoffen einstellt. Insbesondere hat sich gezeigt, dass mit den drei vorgeschlagenen Lagen unterschiedlicher Adsorbentien folgende Schadstoffe besonders effizient aus dem jeweiligen Luftstrom entfernt werden konnten: Ammoniak, Azetaldehyd, Schwefelwasserstoff, 2-Butanon, Trimethylamin, Hexanal, Propionsäure und n-Butan. Durch eine Vielzahl von Untersuchungen hat sich dabei in überraschender Weise herausgestellt, dass eine mehrlagige Anordnung dieser unterschiedlichen Adsorbentien eine höhere Effizienz zeigt, als eine einlagige Anordnung aus einem entsprechenden Gemisch dieser Adsorbentien. Da grundsätzlich nur diese drei Funktionsschichten erforderlich sind, lässt sich ein zugehöriges Luftfilterelement auch mit einem vergleichsweise geringen Durchströmungswiderstand realisieren.

Erfindungsgemäß weist die Aktivlage mindestens 90 Gew.% nicht-imprägnierte Aktivkohlepartikel auf, während die Imprägnierlage mindestens 15 Gew.% imprägnierte Aktivkohlepartikel aufweist. Die Ionentauschlage ist erfindungsgemäß hygroskopisch und enthält Säureionen, die mit Wasser eine für Mikroorganismen saure toxische Umgebung bilden.

Erfindungsgemäß ist die Aktivlage zwischen der Ionentauschlage und der Imprägnierlage angeordnet.

Für die Anwendung hat sich als vorteilhaft herausgestellt, wenn die Ionentauschlage bezüglich einer für das Filtermaterial vorgesehenen Durchströmungsrichtung im Einbauzustand stromauf der Imprägnierlage angeordnet ist.

Besonders hohe Adsorptionsgrade lassen sich durch folgende Ausführungsformen realisieren, die alternativ oder kumulativ oder in beliebiger Kombination realisiert werden können. Beispielsweise kann ein Aschegehalt der Aktivlage auf maximal 3 Gew.-% begrenzt sein. Vorzugsweise ist der Aschegehalt in der Aktivlage kleiner, insbesondere mindestens 50% kleiner, als in der Imprägnierlage. Ferner kann die Aktivlage nicht-imprägnierte Aktivkohlepartikel aufweisen, die im Wesentlichen eine Körnung von 30x60 oder 30x70 Mesh aufweisen, wobei Mesh der Maschenweite eines Siebs entspricht, das für ein Granulat mit der besagten Körnung noch durchlässig ist.

Die Imprägnierlage kann mit Aktivkohlepartikeln hergestellt sein, wobei die "Imprägnierung" darin liegt, dass die Adsorptionsfähigkeit der Aktivkohlepartikel für Kohlenwasserstoffe mittels eines Zusatzstoffs reduziert worden ist. Beispielsweise sind die Aktivkohlepartikel mittels einer sauren und/oder basischen bzw. alkalischen Lösung behandelt worden. Beispielsweise kann die Imprägnierlage mit Kaliumjodid imprägnierte Aktivkohlepartikel aufweisen. Zusätzlich oder alternativ kann die Imprägnierlage mit Kaliumkarbonat (Pottasche) imprägnierte Aktivkohlepartikel aufweisen. Bevorzugt ist eine Variante, bei welcher die Imprägnierlage sowohl einen Anteil mit Kaliumjodid imprägnierter Aktivkohlepartikel als auch einen Anteil mit Kaliumkarbonat imprägnierter Aktivkohlepartikel aufweist. Vorzugsweise ist dabei der mit Kaliumjodid imprägnierte Anteil größer als der mit Kaliumkarbonat imprägnierte Anteil. Insbesondere ist der mit Kaliumjodid imprägnierte Anteil etwa doppelt so groß wie der mit Kaliumkarbonat imprägnierte Anteil. Besonders vorteilhaft ist dabei eine Zusammensetzung, bei welcher die Imprägnierlage einen Gewichtsanteil von 10% mit Kaliumjodid imprägnierten Aktivkohlepartikeln, einen Gewichtsanteil von 5% mit Kaliumkarbonat imprägnierten Aktivkohlepartikeln, wobei die restlichen 85 Gew.-% aus nicht-imprägnierten Aktivkohlepartikeln und Asche bestehen. Die bei der Aktivierung der Aktivkohle anfallende Asche wirkt ebenfalls imprägnierend, da sie Poren der Aktivkohle verstopft und dadurch die für die Adsorption der Kohlenwasserstoffe zur Verfügung stehende Oberfläche reduziert. Die vorstehenden Prozentangaben können dabei zwischen den einzelnen Anteilen um ±2 %-Punkte variieren.

Erfindungsgemäß ist die Ionentauschlage hygroskopisch und enthält Ionen, die mit Wasser eine toxische Umgebung bilden. Die hygroskopische Ionentauschlage absorbiert Wasser aus der Luftströmung. Zum einen wird dadurch erreicht, dass deutlich weniger Feuchtigkeit in die jeweils nachfolgende Lage gelangt, so dass es Mikroorganismen, die sich dort ansammeln können, an einem wesentlichen Bestandteil für biologisches Wachstum mangelt, nämlich an Wasser. Somit kann eine Vermehrung der Mirkoorganismen effizient reduziert werden. Zum anderen entsteht in der Ionentauschlage durch das Wasser in Verbindung mit den Ionen besagte toxische Umgebung, die biologischem Wachstum in der Ionentauschlage entgegenwirkt. Auch wird ein großer Anteil an Mirkoorganismen, die auf ihrem Weg durch die Ionentauschlage dieser toxischen Umgebung ausgesetzt sind, abgetötet. Mikroorganismen, wie z.B. Bakterien, Algen und Pilze, können sich am Filtermaterial anlagern und bei Feuchtigkeit wachsen und sich vermehren, so dass sie in den Luftstrom gelangen können, der in den Fahrgastraum eingeleitet wird. Durch die toxische Wirkung der Ionentauschlage kann eine Belastung der Fahrgäste durch solche Mikroorganismen reduziert werden.

Wie erwähnt enthält die Ionentauschlage Säuereionen, die mit Wasser eine saure Umgebung bilden. Eine solche saure Umgebung, die beispielsweise einen ph-Wert von maximal 3,0 aufweist, ist extrem schädlich für Mikroorganismen.

Die Ionentauschlage kann grundsätzlich so ausgestaltet sein, dass sie störende Anionen und/oder störende Kationen dauerhaft an sich bindet. Die Ionentauschlage weist bevorzugt Kationentauscherpartikel auf. Insbesondere kann die Ionentauschlage lonentauscherpartikel mit Sulfonsäuregruppen aufweisen. Des Weiteren können die lonentauscherpartikel zumindest teilweise faserförmig ausgestaltet sein und in eine Vlieslage mit Filtermaterialfasern eingearbeitet sein. Die Filtermaterialfasern können beispielsweise Kunststofffasern oder Cellulosefasern oder eine Mischung daraus sein. Ebenso ist denkbar, die lonentauscherpartikel zumindest teilweise pulverförmig auszugestalten und in eine Vlieslage mit Filtermaterialfasern einzubinden, wobei auch hier wieder Kunststofffasern und/oder Cellulosefasern für die Vlieslage zum Einsatz kommen können.

Des Weiteren hat sich überraschenderweise als besonders vorteilhaft herausgestellt, für die unterschiedlichen Funktionslagen eine bestimmte Reihenfolge einzuhalten. Eine erhöhte Effizienz lässt sich dementsprechend gemäß einer bevorzugten Ausführungsform erreichen, wenn die Aktivlage erfindungsgemäß zwischen der Imprägnierlage und der Ionentauschlage angeordnet ist, vorzugsweise so, dass die Aktivlage einerseits direkt an die Imprägnierlage und andererseits direkt an die Ionentauschlage angrenzt.

Zusätzlich zur Abfolge der einzelnen Funktionslagen hat sich ferner überraschenderweise herausgestellt, dass es auch bei der Durchströmung mit dem zu reinigenden Luftstrom auf eine bestimmte Reihenfolge der Funktionslagen ankommt. Gemäß einer bevorzugten Weiterbildung, die sich durch eine besonders hohe Effizienz hinsichtlich der Reinigungswirkung für Geruchsstoffe auszeichnet, ist die Ionentauschlage anströmseitig angeordnet, während die Imprägnierlage abströmseitig angeordnet ist. Die Aktivlage befindet sich wieder zwischen der Ionentauschlage und der Imprägnierlage.

Gemäß einer anderen vorteilhaften Ausführungsform kann die Imprägnierlage ein Vlies aus Filtermaterialfasern aufweisen und eine Außenseite des Filtermaterials bilden. Die Imprägnierlage dient dabei gleichzeitig als Stützschicht für das Filtermaterial. Zusätzlich oder alternativ kann die Ionentauschlage ein Vlies aus Filtermaterialfasern aufweisen und eine Außenseite des Filtermaterials bilden. In diesem Fall dient die Ionentauschlage als Stützschicht für das Filtermaterial. Sofern die beiden vorstehenden Varianten kumulativ realisiert werden, weist das Filtermaterial genau drei Funktionslagen auf, nämlich die als Stützschicht dienende, vorzugsweise abströmseitige Imprägnierlage, die als Stützschicht dienende, vorzugsweise anströmseitige Ionentauschlage und die zwischen Imprägnierlage und Ionentauschlage angeordnete Aktivlage.

Bei einer alternativen Ausführungsform kann die Ionentauschlage einerseits direkt an die Aktivlage und andererseits direkt an eine separate, zusätzliche Zusatzlage angrenzen, die im Folgenden auch als erste Zusatzlage und insbesondere auch als anströmseitige Zusatzlage bezeichnet werden kann. Zusätzlich oder alternativ kann die Imprägnierlage einerseits direkt an die Aktivlage und andererseits direkt an eine separate, zusätzliche Zusatzlage angrenzen, die im Hinblick auf die vorstehend bereits genannte Zusatzlage auch als zweite und insbesondere auch als abströmseitige Zusatzlage bezeichnet werden kann. Bei einer kumulierten Realisierung der vorstehenden Varianten weist das Filtermaterial genau fünf Lagen auf, nämlich insbesondere in der Durchströmungsrichtung aufeinanderfolgend die erste Zusatzlage, die Ionentauschlage, die Aktivlage, die Imprägnierlage und die zweite Zusatzlage.

Bei einem alternativen Aufbau kann eine dritte separate Zusatzlage vorgesehen sein. In diesem Fall grenzt die Ionentauschlage einerseits direkt an eine erste Zusatzlage an, während die Imprägnierlage einerseits direkt an die Aktivlage und andererseits direkt an eine zweite Zusatzlage angrenzt. Die Ionentauschlage grenzt nun andererseits direkt an eine dritte Zusatzlage an, die ihrerseits direkt an die Aktivlage angrenzt. Somit besteht in diesem Fall das Filtermaterial aus der Ionentauschlage, der Aktivlage, der Imprägnierlage und den drei Zusatzlagen.

Eine andere Alternative schlägt außerdem eine vierte Zusatzlage vor. In diesem Fall ist dabei vorgesehen, dass die Ionentauschlage einerseits direkt an eine erste Zusatzlage angrenzt, dass die Imprägnierlage einerseits direkt an eine zweite Zusatzlage angrenzt, dass die Ionentauschlage andererseits direkt an eine dritte Zusatzlage angrenzt, dass die Imprägnierlage andererseits direkt an eine vierte Zusatzlage angrenzt, und dass die Aktivlage einerseits direkt an die dritte Zusatzlage und andererseits direkt an die vierte Zusatzlage angrenzt. Folglich besteht in diesem Fall das Filtermaterial aus der Ionentauschlage, der Aktivlage, der Imprägnierlage und den vier Zusatzlagen.

Die jeweilige Stützlage kann einschichtig oder mehrschichtig aufgebaut sein. Die jeweilige Zusatzlage kann z.B. als ein- oder mehrschichtige Stützlage ausgestaltet sein, die im wesentlichen keine Filtrationswirkung besitzt, sondern hauptsächlich zur Aussteifung des Filtermaterials dient. Beispielsweise lässt sich eine solche Stützlage dadurch charakterisieren, dass sie für feste und/oder flüssige Partikel bis zu einer Korngröße von 1mm durchlässig ist. Die Stützlage kann dabei für relativ große Partikel undurchlässig sein, z.B. für Partikel ab einer Korngröße von 1mm. Insoweit kann die Stützlage auch als Makrofilterlage bezeichnet werden.

Alternativ dazu kann die jeweilige Zusatzlage als ein- oder mehrschichtige Partikelfilterlage ausgestaltet sein, die sich durch eine signifikante Filtrationswirkung auszeichnet, üblicherweise jedoch eher biegeweich ist. Beispielsweise charakterisiert sich eine solche Partikelfilterlage dadurch, dass sie für flüssige und/oder feste Partikel bereits ab einer Korngröße von 0,1 mm undurchlässig ist. In diesem Fall ist die Partikelfilterlage als Mikrofilterlage ausgestaltet. Sie kann auch als Nanofilterlage ausgestaltet sein, wenn sie für Partikel schon ab einer Korngröße von 0,1 µm undurchlässig ist. Eine solche Partikelfilterschicht kann jedoch auch zur Steifigkeit des Filtermaterials betragen und insoweit eine gewisse Stützwirkung entfalten.

Vorzugsweise kann vorgesehen sein, dass zumindest eine solche Zusatzlage als Stützlage ausgestaltet ist, die für Partikel mit einer Korngröße von kleiner als 1mm durchlässig ist. Zusätzlich oder alternativ kann vorgesehen sein, dass zumindest eine solche Zusatzlage als Partikelfilterlage ausgestaltet ist, die für Partikel mit einer Korngröße von größer als 0,1mm undurchlässig ist. Bevorzugt kann dabei vorgesehen sein, dass die jeweilige Zusatzlage, wenn sie eine Anströmseite oder eine Abströmseite des Filtermaterials bildet, als Stützlage ausgestaltet ist, die für Partikel mit einer Korngröße von kleiner als 1mm durchlässig ist, während die jeweilige Zusatzlage, wenn sie weder eine Anströmseite noch eine Abströmseite des Filtermaterials bildet, zweckmäßig als Partikelfilterlage ausgestaltet sein kann, die für Partikel mit einer Korngröße von größer als 0,1mm undurchlässig ist. Ebenso ist denkbar, die außenliegenden Zusatzlagen als Partikelfilterlagen auszugestalten und die innenliegenden Zusatzlagen als Stützlagen auszugestalten. Zweckmäßig sind die einzelnen Lagen so aufeinander abgestimmt, dass in der Durchströmungsrichtung hinsichtlich der Filtrationswirkung ein Gradien von grob nach fein entsteht, so dass die gröberen Verunreinigungen, wie z.B. Partikel, zuerst abgefangen werden, während die feineren Verunreinigungen tiefer in das Filtermaterial eindringen können. Hierdurch kann die ganze Dicke des Filtermaterials zum Speichern von Verunreinigungen ausgenutzt werden. Auch stellt sich dadurch ein Schutz der aktiven Lagen vor Partikeln ein. Beidpielsweise kann die Porengröße der Zusatzlagen von der Anströmseite zur Abströmseite zunehmen, sofern zwei oder mehr Zusatzlagen zum Einsatz kommen, insbesondere von Makrofilterlage über Mirkofilterlage bis zu Nanofilterlage.

Aneinandergrenzende Lagen können miteinander verklebt sein. Ebenso ist eine thermische Verbindung möglich, z.B. durch Plastifizierung.

Ein erfindungsgemäßes Innenraumluftfilterelement für eine Innenraumluftfiltereinrichtung einer Klimatisierungsanlage eines Fahrzeugs besitzt einen Filterkörper, der mit Hilfe eines Filtermaterials der vorstehend beschriebenen Art gebildet ist. Vorzugsweise ist das Filtermaterial im Filterkörper plissiert, also gefaltet. Der Filterkörper kann dabei flach und eben oder ringförmig ausgestaltet sein. Das zugehörige Filterelement ist dann als Flachfilterelement oder als Ringfilterelement konzipiert. Grundsätzlich sind jedoch auch beliebige andere Geometrien für den Filterkörper bzw. das Filterelement denkbar.

Eine erfindungsgemäße Klimatisierungsanlage für ein Fahrzeug ist mit einer Innenraumluftfiltereinrichtung ausgestattet, die ihrerseits mit wenigstens einem Innenraumluftfilterelement der vorstehend genannten Art ausgestattet ist. Zweckmäßig ist dabei die Ionentauschlage stromauf der Aktivlage angeordnet, während die Imprägnierlage stromab der Aktivlage angeordnet ist.

Die relativen Angaben "stromauf" und "stromab" beziehen sich im vorliegenden Zusammenhang auf eine Strömungsrichtung des zu reinigenden Luftstroms im Bereich des jeweiligen Filterelements, die sich im Betrieb der Klimatisierungsanlage bei der Durchströmung des jeweiligen Filterelements einstellt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Klimatisierungsanlage,
- Fig. 2-6: jeweils eine Schnittansicht eines mehrlagigen Filtermaterials bei verschiedenen Ausführungsformen.

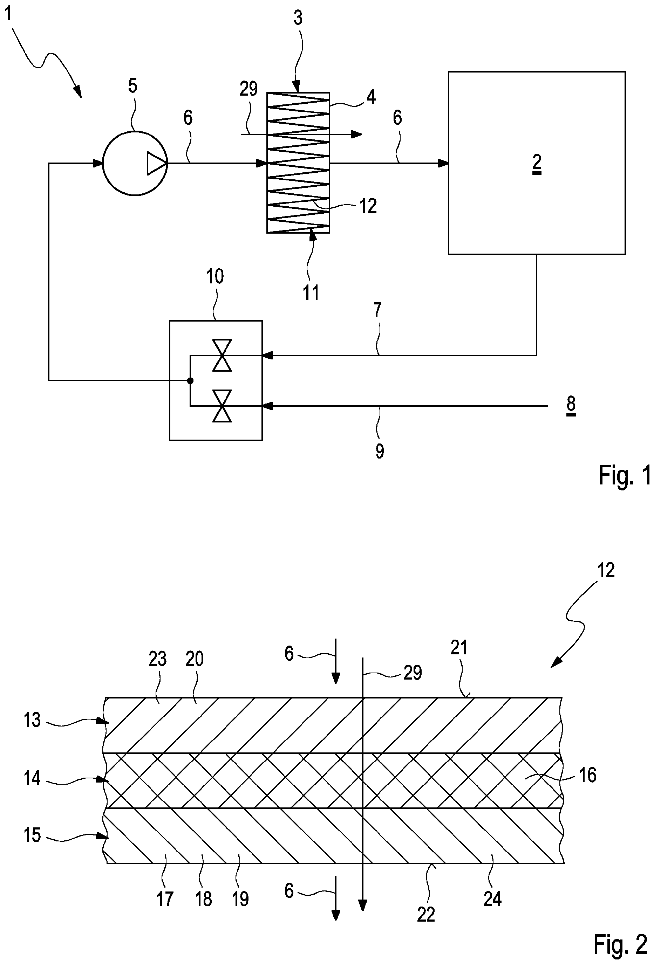

Entsprechend Fig. 1 umfasst eine Klimatisierungsanlage 1, die zum Klimatisieren eines Fahrzeuginnenraums 2 eines im Übrigen nicht gezeigten Fahrzeugs dient, eine Innenraumluftfiltereinrichtung 3, die mit wenigstens einem Innenraumluftfilterelement 4 ausgestattet ist. Die Innenraumluftfiltereinrichtung 3 kann im Folgenden verkürzt auch als Filtereinrichtung 3 bezeichnet werden. Auch das Innenraumluftfilterelement 4 kann im Folgenden verkürzt auch als Filterelement 4 bezeichnet werden. Die Klimatisierungsanlage 1 umfasst ferner ein Gebläse 5 zum Erzeugen eines Luftstroms 6, der dem Innenraum 2 zugeführt wird. Dabei wird der Luftstrom 6 durch die Filtereinrichtung 3 bzw. durch das Filterelement 4 hindurchgeführt, wodurch der Luftstrom 6 gereinigt wird. Das Gebläse 5 kann dabei aus dem Innenraum 2 Umluft 7 ansaugen. Ferner kann das Gebläse 5 aus einer Umgebung 8 des Fahrzeugs Frischluft 9 ansaugen. Mit Hilfe einer Klappeneinrichtung 10 kann zwischen einem Umluftbetrieb, bei dem nur Umluft 7 angesaugt und dem Innenraum 2 zugeführt wird, einem Frischluftbetrieb, bei dem nur Frischluft 9 angesaugt und dem Innenraum 2 zugeführt wird, und einem Mischbetrieb umgeschaltet werden, bei dem sowohl Umluft 7 als auch Frischluft 9 angesaugt und dem Innenraum 2 zugeführt wird. Weitere typische Komponenten der Klimatisierungsanlage 1, wie z.B. eine Heizeinrichtung sowie eine Kühleinrichtung, sind hier zur Wahrung der Übersichtlichkeit weggelassen.

Das Filterelement 4 weist einen Filterkörper 11 auf, der mit Hilfe eines Filtermaterials 12 gebildet ist. Zweckmäßig ist das Filtermaterial 12 im Filterkörper 11 gefaltet. Im Beispiel der Fig. 1 ist der Filterkörper 11 plattenförmig und eben dargestellt. Grundsätzlich kann auch ein ringförmiger Filterkörper 11 vorgesehen sein. Im Betrieb der Klimatisierungsanlage 1 durchsströmt der Luftstrom 6 das Filterelement 4 bzw. den Filterkörper 11 und somit letztlich auch das Filtermaterial 12 in einer Druchströmungsrichtung 29. Dementsprechend kann das Filtermaterial 12 je nach Aufbau eine für den ordnungsgemäßen Einbauzustand bzw. Gebrauchszustand vorgesehene Durchströmungsrichtung 29 aufweisen, die eingehalten werden muss, damit das Filtermaterial 12 bzw. das damit ausgestattete Filterelement 4 die vorgesehene(n) Filtrationswirkung(en) entfalten kann.

Das hierbei zum Einsatz kommende Filtermaterial 12 ist mehrlagig konzipiert und wird im Folgenden anhand der Fig. 2 bis 6 näher erläutert.

Entsprechend den Fig. 2 bis 6 ist das hier vorgestellte Filtermaterial 12 mehrlagig ausgestaltet, nämlich zumindest dreilagig. In allen Ausführungsformen umfasst das Filtermaterial 12 zumindest eine Ionentauschlage 13, zumindest eine Aktivlage 14 und zumindest eine Imprägnierlage 15. Somit umfasst das hier vorgestellte Filtermaterial 12 zumindest diese drei Funktionslagen 13, 14, 15, die für Geruchsstoffe adsorbierend wirken. Da die einzelnen Funktionslagen 13, 14, 15 außerdem partikuläre Verunreinigungen aus dem Luftstrom 6 herausfiltern können, kann das Filterelement 4 auch als Hybridfilter bezeichnet werden.

Die jeweilige einzelne Funktionslage 13, 14, 15 kann ihrerseits mehrlagig oder mehrschichtig konzipiert sein, also aus zwei oder mehr einzelnen aneinander anliegenden Lagen bestehen. Bevorzugt ist jedoch die hier gezeigte Ausführungsform, bei der die wenigstens drei Funktionslagen 13, 14, 15 jeweils einlagig konzipiert sind.

Die Aktivlage 14 weist hauptsächlich, also als Hauptbestandteil nicht-imprägnierte Aktivkohlepartikel 16 auf. Erfindungsgemäß beträgt der Anteil an nicht-imprägnierten Aktivkohlepartikeln 16 mindestens 90 Gew.-%, insbesondere mindestens 95 Gew.-%. Die Aktivlage 14 kann ferner einen Aschegehalt aufweisen, der maximal 5 Gew.-% und bevorzugt maximal 3 Gew.-% beträgt. Diese Asche entsteht bei der Aufbereitung der Aktivkohle, bei der "normale" Kohle bei einer hohen Temperatur von z.B. etwa 1.000°C aktiviert wird. Die nicht-imprägnierten Aktivkohlepartikel 16 besitzen bevorzugt eine Körnung von etwa 30x60 oder 30x70 Mesh.

Die Imprägnierlage 15 weist imprägnierte Aktivkohlepartikel 17, 18 auf. Erfindungsgemäß beträgt der Anteil an imprägnierten Aktivkohlepartikeln 17, 18 mindestens 15 Gew.-%. Beispielsweise kann die Imprägnierlage 15 erste Aktivkohlepartikel 17 aufweisen, die mit Kaliumjodid imprägniert sind. Zusätzlich oder alternativ können zweite Aktivkohlepartikel 18 vorgesehen sein, die mit Kaliumkarbonat imprägniert sind. Schließlich kann die Imprägnierlage 15 außerdem dritte Aktivkohlepartikel 19 aufweisen, die nicht mittels eines Zusatzstoffs imprägniert sind. Allerdings kann die Imprägnierlage 15 auch Asche aufweisen, die für die Aktivkohle imprägnierend wirkt, da sie Poren der Aktivkohle verstopft und dadurch die Adsorptionsfähigkeit für Kohlenwasserstoffe reduziert. Bevorzugt weist die Imprägnierlage 15 daher einen Aschegehalt auf, der größer ist als bei der Aktivlage 14. Grundsätzlich kann es sich bei diesen nicht-imprägnierten dritten Aktivkohlepartikel 19 der Imprägnierlage 15 um die gleichen nicht-imprägnierten Aktivkohlepartikel 16 handeln, die auch bei der Aktivlage 14 zum Einsatz kommen. Bevorzugt ist eine Zusammensetzung für die Imprägnierlage 15, bei der etwa 10 Gew.-% mit Kaliumjodid imprägnierte erste Aktivkohlepartikel 17, etwa 5 Gew.-% mit Kaliumkarbonat imprägnierte zweite Aktivkohlepartikel 18 und ein Rest von etwa 85 Gew.-% mit nicht-imprägnierten dritten Aktivkohlepartikeln 19 und Asche vorhanden sind. In der Imprägnierlage 15 besitzen also die nicht-imprägnierte Aktivkohlepartikel 19 einen Gewichtsanteil von weniger als 85%, bevorzugt weniger als 80%.

Die Ionentauschlage 13 weist lonentauscherpartikel 20 auf. Bevorzugt handelt es sich dabei um Kationentauscherpartikel. Die lonentauscherpartikel 20 können Sulfonsäuregruppen beinhalten. Zweckmäßig kann außerdem vorgesehen sein, dass die lonentauscherpartikel 20 zumindest teilweise faserförmig ausgestaltet sind und dabei in eine Vlieslage mit Filtermaterialfasern eingearbeitet sind. Ebenso ist denkbar, die lonentauscherpartikel 20 zumindest teilweise pulverförmig auszugestalten und in eine Vlieslage mit Filtermaterialfasern einzubinden. Ebenso ist eine kombinierte Ausführungsform denkbar, bei der sowohl faserförmige als auch pulverförmige lonentauscherpartikel 20 vorliegen.

Die einzelnen Funktionslagen 13, 14, 15 besitzen innerhalb des Filtermaterials 12 eine bevorzugte Anordnung bzw. Reihenfolge, bei der die Aktivlage 14 zwischen der Ionentauschlage 13 und der Imprägnierlage 15 angeordnet ist. Bevorzugt kommt das Filtermaterial 12 dabei ohne Zwischenschichten aus, so dass die Aktivlage 14 einerseits direkt an die Imprägnierlage 15 und andererseits direkt an die Ionentauschlage 13 angrenzt. In den Fig. 2 bis 6 ist außerdem die Luftströmung 6 durch Pfeile symbolisiert, um die sich im Einbauzustand ergebende Durchströmungsrichtung 29 des Filtermaterials 12 anzudeuten. Dementsprechend besitzt das Filtermaterial 12 eine der ankommenden Luftströmung 6 zugewandte, eintrittsseitige Anströmseite 21, die auch als Eintrittsseite 21 bezeichnet werden kann, und eine davon abgewandte austrittsseitige Abströmseite 22, die auch als Austrittsseite 22 bezeichnet werden kann.

Bevorzugt ist demnach die Ionentauschlage 13 anströmseitig angeordnet, also der Anströmseite 21 zugewandt, während die Imprägnierlage 15 austrittsseitig angeordnet und der Abströmseite 22 zugewandt ist.

Bei der in Fig. 2 gezeigten Ausführungsform weist die Ionentauschlage 13 ein Vlies 23 aus Filtermaterialfasern auf, in das die lonentauscherpartikel 20 eingebettet sind. Durch das Vlies 23 ist die Ionentauschlage 13 hinreichend stabil, so dass sie eine Stützschicht für das Filtermaterial 12 bilden kann. Dementsprechend kann die Ionentauschlage 13 bei dieser Ausführungsform eine Außenseite, hier die Anströmseite 21, des Filtermaterials 12 bilden. Bei dieser Ausführungsform ist außerdem auch die Imprägnierlage 15 mit einem Vlies 24 aus Filtermaterialfasern gebildet, in das die imprägnierten Aktivkohlepartikel 17, 18 und ggf. auch die nicht-imprägnierten Aktivkohlepartikel 19 eingebunden sind. Dementsprechend kann auch die Imprägnierlage 15 durch das Vlies 24 eine Stützschicht für das Filtermaterial 12 bilden. Im Beispiel bildet die Imprägnierlage 15 daher ebenfalls eine Außenseite, nämlich die Austrittsseite 22 des Filtermaterials 12. Bei der in Fig. 2 gezeigten Ausführungsform weist das Filtermaterial 12 somit genau drei Lagen auf, nämlich die genannten Funktionslagen 13, 14, 15, also die Ionentauschlage 13, die Aktivlage 14 und die Imprägnierlage 15. Wie vorstehend genannt, kann die jeweilige Funktionslage 13, 14, 15 in sich mehrlagig bzw. mehrschichtig sein.

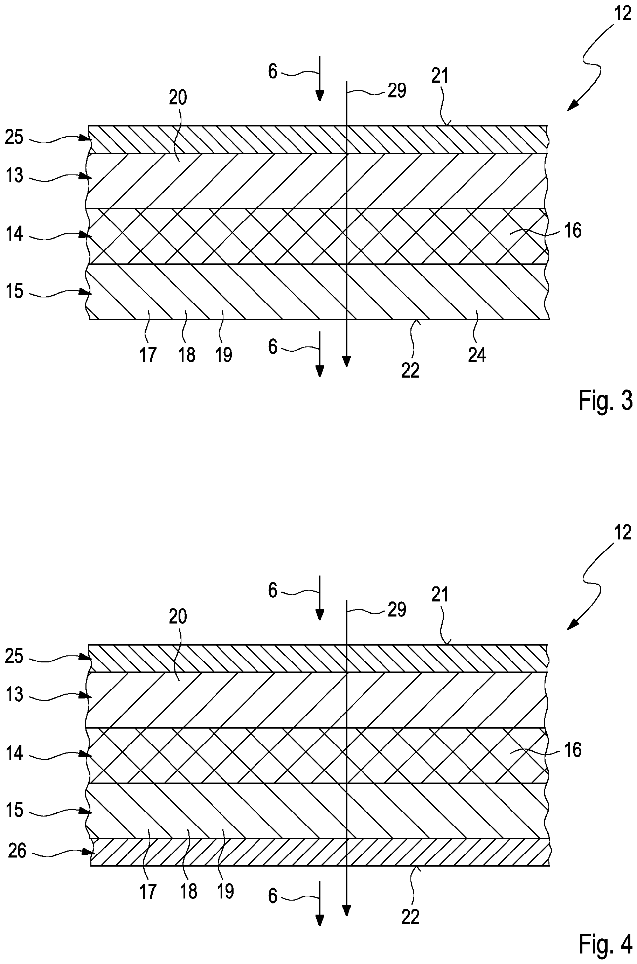

Entsprechend Fig. 3 kann das Filtermaterial 12 anströmseitig eine anströmseitige oder erste Zusatzlage 25 aufweisen, die dann die Anströmseite 21 oder Eintrittsseite 21 des Filtermaterials 12 bildet. Die Zusatzlage 25 ist dabei zweckmäßig ein Vlies aus Filtermaterialfasern und kann, je nach Porengröße als Stützschicht oder als Partikelfilterschicht ausgestaltet sein. Die Ionentauschlage 13 grenzt dann einerseits an die Aktivlage 14 und andererseits an diese erste Zusatzlage 25 jeweils direkt an. Zur abströmseitigen Abstützung kann das Filtermaterial 12 wie in Fig. 3 wieder die mit dem Vlies 24 verstärkte Imprägnierlage 15 aufweisen. Bevorzugt ist jedoch die in Fig. 4 gezeigte Ausführungsform.

Gemäß Fig. 4 weist das Filtermaterial 12 zusätzlich zur anströmseitigen ersten Zusatzlage 25 eine abströmseitige zweite Zusatzlage 26 auf, die in diesem Fall die Abströmseite 22 bzw. die Austrittsseite 22 des Filtermaterials 12 bildet. Die Imprägnierlage 15 grenzt dadurch einerseits an die Aktivlage 14 und andererseits an die zweite Zusatzlage 26 jeweils direkt an. Bei dieser Ausführungsform besitzt das Filtermaterial 12 genau fünf Lagen, nämlich die drei Funktionslagen 13, 14, 15 und die beiden Zusatzlagen 25, 26. Wie erwähnt, kann dabei die jeweilige Einzellage jeweils mehrlagig bzw. mehrschichtig konzipiert sein. Die zweite Zusatzlage 26 ist zweckmäßig ebenfalls ein Vlies aus Filtermaterialfasern und kann je nach Porengröße als Stützschicht oder als Partikelfilterschicht ausgestaltet sein.

Alternativ ist eine weitere Ausführungsform analog zu der in Fig. 3 gezeigten Variante denkbar, bei der ebenfalls nur eine Zusatzlage vorhanden ist, nämlich nur die zweite Zusatzlage 26 an der Abströmseite 22. In diesem Fall ist dann die Ionentauschlage 13 wieder wie in Fig. 2 mit dem Vlies 23 verstärkt. In diesem Fall sowie in dem Fall der Fig. 3 weist das Filtermaterial 12 dann vier Lagen auf, nämlich die drei Funktionslagen 13, 14, 15h und die jeweilige Zusatzlage 25 bzw. 26. Wie erwähnt kann dabei die jeweilige Einzellage für sich wieder mehrschichtig konzipiert sein.

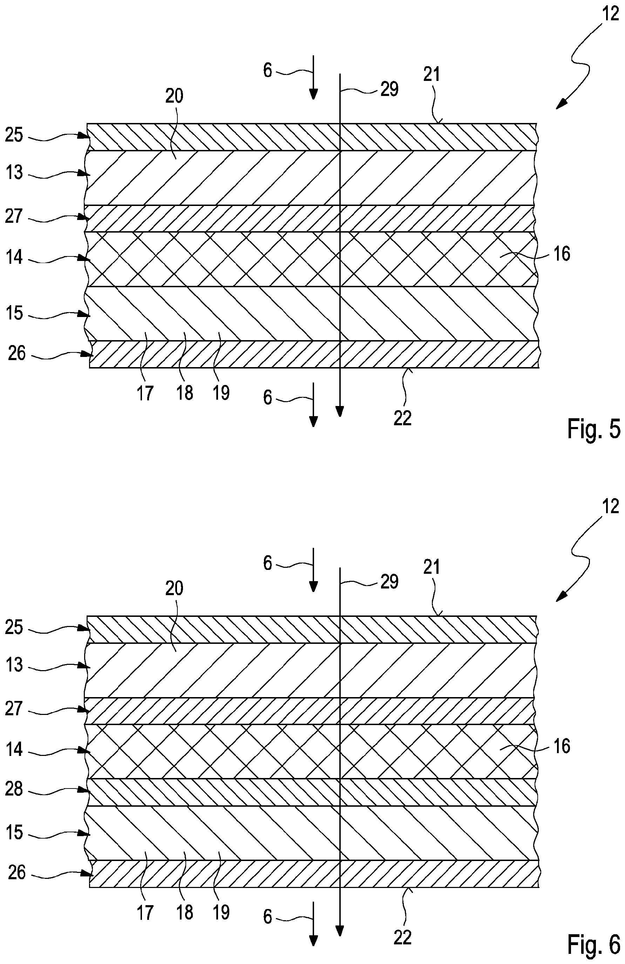

Gemäß Fig. 5 kann bei einem alternativen Aufbau außerdem eine dritte separate Zusatzlage 27 vorgesehen sein. In diesem Fall grenzt die Ionentauschlage 13 einerseits direkt an die erste Zusatzlage 25 an, während die Imprägnierlage 15 einerseits direkt an die Aktivlage 14 und andererseits direkt an die zweite Zusatzlage 26 angrenzt. Die Ionentauschlage 13 grenzt nun andererseits direkt an die dritte Zusatzlage 27 an, die ihrerseits direkt an die Aktivlage 14 angrenzt. Somit besteht in diesem Fall das Filtermaterial 12 aus der Ionentauschlage 13, der Aktivlage 14, der Imprägnierlage 15 und den drei Zusatzlagen 25, 26, 27. Die einzelnen Lagen 13, 14, 15, 25, 26, 27 folgen in der für den Einbauzustand vorgesehenen Durchströmungsrichtung 29 des Filtermaterials 12 von der Anströmseite 21 zur Abströmseite 22 wie folgt aufeinander: Zuerst kommt die erste Zusatzlage 25, danach folgen aufeinander die Ionentauschlage 13, die dritte Zusatzlage 27, die Aktivlage 14 sowie die Imprägnierlage 15, und zuletzt folgt die zweite Zusatzlage 26.

Entsprechend Fig. 6 kann wird für eine weitere Ausführungsform außerdem eine vierte Zusatzlage 28 vorgeschlagen. In diesem Fall ist demnach vorgesehen, dass die Ionentauschlage 13 einerseits direkt an die erste Zusatzlage 25 angrenzt, dass die Imprägnierlage 15 einerseits direkt an die zweite Zusatzlage 26 angrenzt, dass die Ionentauschlage 13 andererseits direkt an die dritte Zusatzlage 27 angrenzt, dass die Imprägnierlage 15 andererseits direkt an die vierte Zusatzlage 28 angrenzt, und dass die Aktivlage 14 einerseits direkt an die dritte Zusatzlage 27 und andererseits direkt an die vierte Zusatzlage 28 angrenzt. Folglich besteht in diesem Fall das Filtermaterial 12 aus der Ionentauschlage 13, der Aktivlage 14, der Imprägnierlage 15 und den vier Zusatzlagen 25, 26, 27, 28. Die einzelnen Lagen 13, 14, 15, 25, 26, 27, 28 folgen in der für den Einbauzustand vorgesehenen Durchströmungsrichtung 29 des Filtermaterials 12 von der Anströmseite 21 zur Abströmseite 22 wie folgt aufeinander: Zuerst kommt die erste Zusatzlage 25, danach folgen aufeinander die Ionentauschlage 13, die dritte Zusatzlage 27, die Aktivlage 14, die vierte Zusatzlage 28 sowie die Imprägnierlage 15, und zuletzt folgt die zweite Zusatzlage 26.

Sofern die vorstehend genannten Zusatzlagen 25, 26, 27, 28 ebenfalls eine Filtrationsfunktion für partikuläre Verunreinigungen haben und demensprechend als Partikelfilterlagen ausgestaltet sind, lassen sich diese Filtrationsfunktionen auf diese "passiven" Zusatzlagen 25, 26, 27, 28 verlagern, was die "aktiven" Funktionslagen 13, 14, 15 entsprechend von diesen Filtrationsfunktionen entlastet. Diese Zusatzlagen 25, 26, 27, 28 dienen somit nicht aktiv zur Adsorption von üblichen gasförmigen Geruchsstoffen und enthalten also insbesondere keine Aktivkohlepartikel. Die Zusatzlagen 25, 26, 27, 28 sind demnach vorzugsweise aktivkohlefrei.

## Patentansprüche

1. Mehrlagiges Filtermaterial (12) für ein Innenraumluftfilterelement (4) einer Klimatisierungsanlage (1) eines Fahrzeugs,
- wobei das Filtermaterial (12) zumindest drei Funktionslagen (13, 14, 15) aufweist, die sich durch unterschiedliche Reinigungsfunktionen voneinander unterscheiden,
- wobei das Filtermaterial (12) als Funktionslage eine Aktivlage (14) aufweist, die mindestens 90 Gew.% nicht-imprägnierte Aktivkohlepartikel (16) aufweist,
- wobei das Filtermaterial (12) als Funktionslage eine Imprägnierlage (15) aufweist, die mindestens 15 Gew.% imprägnierte Aktivkohlepartikel (17, 18) aufweist,
- wobei das Filtermaterial (12) als Funktionslage eine hygroskopische Ionentauschlage (13) aufweist, die lonentauscherpartikel (20) aufweist und Säureionen enthält, die mit Wasser eine für Mikroorganismen saure toxische Umgebung bilden,
- wobei die Aktivlage (14) zwischen der Ionentauschlage (13) und der Imprägnierlage (15) angeordnet ist.

2. Filtereinrichtung nach Anspruch 1,
**dadurch gekennzeichnet,**
**dass** ein Aschegehalt in der Imprägnierlage (15) größer ist als in der Aktivlage (14).

3. Filtermaterial nach einem der vorhergehenden Ansprüche,
**dadurch gekennzeichnet,**
**dass** die Aktivlage (14) einen Aschegehalt von maximal 5 Gew.-% oder von maximal 3 Gew.-% aufweist.

4. Filtermaterial nach einem der vorhergehenden Ansprüche,
**dadurch gekennzeichnet,**
**dass** die Aktivlage (14) Aktivkohlepartikel (16) aufweist, die eine Körnung von 30x60 oder 30x70 Mesh aufweisen.

5. Filtermaterial nach einem der vorhergehenden Ansprüche,
**dadurch gekennzeichnet,**
**dass** die Imprägnierlage (15) einen Anteil mit Kaliumjodid imprägnierten Aktivkohlepartikeln (17) und einen Anteil mit Kaliumkarbonat imprägnierten Aktivkohlepartikeln (18) aufweist, wobei der mit Kaliumjodid imprägnierte Anteil größer ist als der mit Kaliumkarbonat imprägnierte Anteil.

6. Filtermaterial nach einem der vorhergehenden Ansprüche,
**dadurch gekennzeichnet,**
**dass** die Ionentauschlage (13) hygroskopisch ist und Ionen enthält, die mit Wasser eine toxische Umgebung bilden, wobei die Ionentauschlage (13) Säuereionen enthält, die mit Wasser eine saure Umgebung bilden.

7. Filtermaterial nach einem der vorhergehenden Ansprüche,
**dadurch gekennzeichnet,**
- **dass** die Ionentauschlage (13) Kationentauscherpartikel aufweist, und/oder
- **dass** die Ionentauschlage (13) lonentauscherpartikel (20) mit Sulfonsäuregruppen aufweist, und/oder
- **dass** die lonentauscherpartikel (20) zumindest teilweise faserförmig ausgestaltet sind und in eine Vlieslage mit Filtermaterialfasern eingearbeitet sind, und/oder
- **dass** die lonentauscherpartikel (20) zumindest teilweise pulverförmig ausgestaltet sind und in eine Vlieslage mit Filtermaterialfasern eingebunden sind.

8. Filtermaterial nach einem der vorhergehenden Ansprüche,
**dadurch gekennzeichnet,**
**dass** die Aktivlage (14) einerseits direkt an die Imprägnierlage (15) und andererseits direkt an die Ionentauschlage (13) angrenzt.

9. Filtermaterial nach einem der vorhergehenden Ansprüche,
**dadurch gekennzeichnet,**
- **dass** die Imprägnierlage (15) ein Vlies (24) aus Filtermaterialfasern aufweist und eine Außenseite des Filtermaterials (12) bildet, und
- **dass** die Ionentauschlage (13) ein Vlies (23) aus Filtermaterialfasern aufweist und eine Außenseite des Filtermaterials (12) bildet, und
- **dass** das Filtermaterial (12) nur die Ionentauschlage (13), die Aktivlage (14) und die Imprägnierlage (15) aufweist.

10. Filtermaterial nach einem der Ansprüche 1 bis 8,
**dadurch gekennzeichnet,**
- **dass** die Ionentauschlage (13) einerseits direkt an die Aktivlage (14) und andererseits direkt an eine erste Zusatzlage (25) angrenzt,
- **dass** die Imprägnierlage (15) einerseits direkt an die Aktivlage (14) und andererseits direkt an eine zweite Zusatzlage (26) angrenzt,
- **dass** das Filtermaterial (12) aus der Ionentauschlage (13), der Aktivlage (14), der Imprägnierlage (15) und den beiden Zusatzlagen (25, 26) besteht.

11. Filtermaterial nach einem der Ansprüche 1 bis 8,
**dadurch gekennzeichnet,**
- **dass** die Ionentauschlage (13) einerseits direkt an eine erste Zusatzlage (25) angrenzt,
- **dass** die Imprägnierlage (15) einerseits direkt an die Aktivlage (14) und andererseits direkt an eine zweite Zusatzlage (26) angrenzt,
- **dass** die Ionentauschlage (13) andererseits direkt an eine dritte Zusatzlage (27) angrenzt, die ihrerseits direkt an die Aktivlage (14) angrenzt,
- **dass** das Filtermaterial (12) aus der Ionentauschlage (13), der Aktivlage (14), der Imprägnierlage (15) und den drei Zusatzlagen (25, 26, 27) besteht.

12. Filtermaterial nach einem der Ansprüche 1 bis 8,
**dadurch gekennzeichnet,**
- **dass** die Ionentauschlage (13) einerseits direkt an eine erste Zusatzlage (25) angrenzt,
- **dass** die Imprägnierlage (15) einerseits direkt an eine zweite Zusatzlage (26) angrenzt,
- **dass** die Ionentauschlage (13) andererseits direkt an eine dritte Zusatzlage (27) angrenzt,
- **dass** die Imprägnierlage (15) andererseits direkt an eine vierte Zusatzlage (28) angrenzt,
- **dass** die Aktivlage (14) einerseits direkt an die dritte Zusatzlage (27) und andererseits direkt an die vierte Zusatzlage (28) angrenzt,
- **dass** das Filtermaterial (12) aus der Ionentauschlage (13), der Aktivlage (14), der Imprägnierlage (15) und den vier Zusatzlagen (25, 26, 27, 28) besteht.

13. Filtermaterial nach einem der Ansprüche 10 bis 12,
**dadurch gekennzeichnet,**
- **dass** zumindest eine solche Zusatzlage (25, 26, 27, 28) als Stützlage ausgestaltet ist, die für Partikel mit einer Korngröße von kleiner als 1mm durchlässig ist, und/oder
- **dass** zumindest eine solche Zusatzlage (25, 26, 27, 28) als Partikelfilterlage ausgestaltet ist, die für Partikel mit einer Korngröße von größer als 0,1mm undurchlässig ist, und/oder
- **dass** die jeweilige Zusatzlage (25, 26, 27, 28), wenn sie eine Anströmseite (21) oder eine Abströmseite (22) des Fitlermaterials (12) bildet, als Stützlage ausgestaltet ist, die für Partikel mit einer Korngröße von kleiner als 1mm durchlässig ist, und/oder
- **dass** die jeweilige Zusatzlage (25, 26, 27, 28), wenn sie weder eine Anströmseite (21) noch eine Abströmseite (22) des Fitlermaterials (12) bildet, als Partikelfilterlage ausgestaltet ist, die für Partikel mit einer Korngröße von größer als 0,1mm undurchlässig ist.

14. Innenraumluftfilterelement für eine Klimatisierungsanlage (1) eines Fahrzeugs, mit einem Filterkörper (11), der mit einem Filtermaterial (12) nach einem der vorhergehenden Ansprüche gebildet ist.

15. Klimatisierungsanlage (1) für ein Fahrzeug, mit einer Innenraumluftfiltereinrichtung (3), die zumindest ein Innenraumluftfilterelement (4) nach Anspruch 14 aufweist, wobei die Ionentauschlage (13) stromauf der Aktivlage (14) angeordnet ist, während die Imprägnierlage (15) stromab der Aktivlage (14) angeordnet ist.

## Claims

1. Multilayered filter material (12) for a cabin air filter element (4) of an air-conditioning system (1) of a vehicle,
- wherein the filter material (12) has at least three functional layers (13, 14, 15), which differ from one another by having different cleaning functions,
- wherein the filter material (12) has an active layer (14) as a functional layer, which has at least 90 wt.% non-impregnated activated carbon particles (16),
- wherein the filter material (12) has an impregnation layer (15) as a functional layer, which has at least 15 wt.% impregnated activated carbon particles (17, 18),
- wherein the filter material (12) has a hygroscopic ion exchange layer (13) as a functional layer, which has ion exchange particles (20) and contains acid ions which form an acidic environment with water which is toxic to microorganisms,
- wherein the active layer (14) is arranged between the ion exchange layer (13) and the impregnation layer (15).

2. Filter device according to claim 1,
**characterized in that**
an ash content in the impregnation layer (15) is greater than in the active layer (14).

3. Filter material according to any one of the preceding claims,
**characterized in that**
the active layer (14) has an ash content of at most 5 wt.% or of at most 3 wt.%.

4. Filter material according to any one of the preceding claims,
**characterized in that**
the active layer (14) has activated carbon particles (16) which have a particle size of 30x60 or 30x70 mesh.

5. Filter material according to any one of the preceding claims,
**characterized in that**
the impregnation layer (15) has a proportion of activated carbon particles impregnated with potassium iodide (17) and a proportion of activated carbon particles impregnated with potassium carbonate (18), wherein the proportion impregnated with potassium iodide is greater than the proportion impregnated with potassium carbonate.

6. Filter material according to any one of the preceding claims,
**characterized in that**
the ion exchange layer (13) is hygroscopic and contains ions which form a toxic environment with water, wherein the ion exchange layer (13) contains acid ions which form an acidic environment with water.

7. Filter material according to any one of the preceding claims,
**characterized in that**
- the ion exchange layer (13) has cation exchange particles, and/or
- the ion exchange layer (13) has ion exchange particles (20) with sulfonic acid groups, and/or
- the ion exchange particles (20) are configured to be at least partially fiber-like and are incorporated into a non-woven layer with filter material fibers, and/or
- the ion exchange particles (20) are configured to be at least partially in powder form and are integrated into a non-woven layer with filter material fibers.

8. Filter material according to any one of the preceding claims,
**characterized in that**
the active layer (14) is directly adjacent to the impregnation layer (15) on the one hand and directly adjacent to the ion exchange layer (13) on the other hand.

9. Filter material according to any one of the preceding claims,
**characterized in that**
- the impregnation layer (15) has a fleece (24) of filter material fibers and forms an outer side of the filter material (12), and
- the ion exchange layer (13) has a fleece (23) of filter material fibers and forms an outer side of the filter material (12), and
- the filter material (12) has only the ion exchange layer (13), the active layer (14) and the impregnation layer (15).

10. Filter material according to any one of claims 1 to 8,
**characterized in that**
- the ion exchange layer (13) is directly adjacent to the active layer (14) on the one hand and directly adjacent to a first additional layer (25) on the other hand,
- the impregnation layer (15) is directly adjacent to the active layer (14) on the one hand and directly adjacent to a second additional layer (26) on the other hand,
- the filter material (12) consists of the ion exchange layer (13), the active layer (14), the impregnation layer (15) and the two additional layers (25, 26).

11. Filter material according to any one of claims 1 to 8,
**characterized in that**
- the ion exchange layer (13) is directly adjacent to a first additional layer (25) on the one hand,
- the impregnation layer (15) is directly adjacent to the active layer (14) on the one hand and directly adjacent to a second additional layer (26) on the other hand,
- the ion exchange layer (13) is directly adjacent to a third additional layer (27) on the other hand, which is in turn directly adjacent to the active layer (14),
- the filter material (12) consists of the ion exchange layer (13), the active layer (14), the impregnation layer (15) and the three additional layers (25, 26, 27).

12. Filter material according to any one of claims 1 to 8,
**characterized in that**
- the ion exchange layer (13) is directly adjacent to a first additional layer (25) on the one hand,
- the impregnation layer (15) is directly adjacent to a second additional layer (26) on the one hand,
- the ion exchange layer (13) is directly adjacent to a third additional layer (27) on the other hand,
- the impregnation layer (15) is directly adjacent to a fourth additional layer (28) on the other hand,
- the active layer (14) is directly adjacent to the third additional layer (27) on the one hand and directly adjacent to the fourth additional layer (28) on the other hand,
- the filter material (12) consists of the ion exchange layer (13), the active layer (14), the impregnation layer (15) and the four additional layers (25, 26, 27, 28).

13. Filter material according to any one of claims 10 to 12,
**characterized in that**
- at least one such additional layer (25, 26, 27, 28) is configured as a support layer which is permeable to particles with a particle size of less than 1 mm, and/or
- at least one such additional layer (25, 26, 27, 28) is configured as a particle filter layer which is impermeable to particles with a particle size of more than 0.1 mm, and/or
- the respective additional layer (25, 26, 27, 28), if it forms an upstream side (21) or a downstream side (22) of the filter material (12), is configured as a support layer which is permeable to particles with a particle size of less than 1 mm, and/or
- the respective additional layer (25, 26, 27, 28), if it forms neither an upstream side (21) nor a downstream side (22) of the filter material (12), is configured as a particle filter layer which is impermeable to particles with a particle size of more than 0.1 mm.

14. Cabin air filter element for an air-conditioning system (1) of a vehicle, with a filter body (11), which is formed with a filter material (12) according to any one of the preceding claims.

15. Air-conditioning system (1) for a vehicle, with a cabin air filter device (3), which has at least one cabin air filter element (4) according to claim 14, wherein the ion exchange layer (13) is arranged upstream of the active layer (14), while the impregnation layer (15) is arranged downstream of the active layer (14).

## Revendications

1. Matériau filtrant multicouche (12) pour un élément filtrant d'air intérieur (4) d'un système de climatisation (1) d'un véhicule,
- dans lequel le matériau filtrant (12) présente au moins trois couches fonctionnelles (13, 14, 15) qui se différencient les unes des autres par des fonctions de nettoyage différentes,
- dans lequel le matériau filtrant (12) présente en tant que couche fonctionnelle une couche active (14) qui présente au moins 90 % en poids de particules de charbon actif (16) non imprégnées,
- dans lequel le matériau filtrant (12) présente en tant que couche fonctionnelle une couche d'imprégnation (15) qui présente au moins 15 % en poids de particules de charbon actif (17, 18) imprégnées,
- dans lequel le matériau filtrant (12) présente en tant que couche fonctionnelle une couche échangeuse d'ions hygroscopique (13) qui présente des particules échangeuses d'ions (20) et contient des ions acides qui forment avec l'eau un environnement toxique acide pour les micro-organismes,
- dans lequel la couche active (14) est disposée entre la couche échangeuse d'ions (13) et la couche d'imprégnation (15).

2. Appareil filtrant selon la revendication 1,
**caractérisé en ce que**
une teneur en cendres dans la couche d'imprégnation (15) est supérieure à celle de la couche active (14).

3. Matériau filtrant selon l'une quelconque des revendications précédentes,
**caractérisé en ce que**
la couche active (14) présente une teneur en cendres de maximum 5 % en poids ou de maximum 3 % en poids.

4. Matériau filtrant selon l'une quelconque des revendications précédentes,
**caractérisé en ce que**
la couche active (14) présente des particules de charbon actif (16) qui présentent une granulométrie de 30x60 ou 30x70 mesh.

5. Matériau filtrant selon l'une quelconque des revendications précédentes,
**caractérisé en ce que**
la couche d'imprégnation (15) présente une part de particules de charbon actif (17) imprégnées d'iodure de potassium et une part de particules de charbon actif (18) imprégnées de carbonate de potassium, dans lequel la part imprégnée d'iodure de potassium est supérieure à la part imprégnée de carbonate de potassium.

6. Matériau filtrant selon l'une quelconque des revendications précédentes,
**caractérisé en ce que**
la couche échangeuse d'ions (13) est hygroscopique et contient des ions qui forment avec l'eau un environnement toxique, dans lequel la couche échangeuse d'ions (13) contient des ions acides qui forment un environnement acide avec l'eau.

7. Matériau filtrant selon l'une quelconque des revendications précédentes,
**caractérisé en ce que**
- la couche échangeuse d'ions (13) présente des particules échangeuses de cations, et/ou
- la couche échangeuse d'ions (13) présente des particules échangeuses d'ions (20) avec des groupes d'acide sulfonique, et/ou
- les particules échangeuses d'ions (20) sont conçues au moins partiellement sous forme de fibres et sont incorporées dans une couche de non-tissé avec des fibres de matériau filtrant, et/ou
- les particules échangeuses d'ions (20) sont conçues au moins partiellement sous forme de poudre et sont intégrées dans une couche de non-tissé avec des fibres de matériau filtrant.

8. Matériau filtrant selon l'une quelconque des revendications précédentes,
**caractérisé en ce que**
la couche active (14) est d'une part directement adjacente à la couche d'imprégnation (15) et d'autre part directement adjacente à la couche échangeuse d'ions (13).

9. Matériau filtrant selon l'une quelconque des revendications précédentes,
**caractérisé en ce que**
- la couche d'imprégnation (15) présente un non-tissé (24) de fibres de matériau filtrant et forme un côté extérieur du matériau filtrant (12), et
- la couche échangeuse d'ions (13) présente un non-tissé (23) de fibres de matériau filtrant et forme un côté extérieur du matériau filtrant (12), et
- le matériau filtrant (12) comporte uniquement la couche échangeuse d'ions (13), la couche active (14) et la couche d'imprégnation (15).

10. Matériau filtrant selon l'une quelconque des revendications 1 à 8,
**caractérisé en ce que**
- la couche échangeuse d'ions (13) est d'une part directement adjacente à la couche active (14) et d'autre part directement adjacente à une première couche supplémentaire (25),
- la couche d'imprégnation (15) est d'une part directement adjacente à la couche active (14) et d'autre part directement adjacente à une deuxième couche supplémentaire (26),
- le matériau filtrant (12) est constitué de la couche échangeuse d'ions (13), de la couche active (14), de la couche d'imprégnation (15) et des deux couches supplémentaires (25, 26).

11. Matériau filtrant selon l'une quelconque des revendications 1 à 8,
**caractérisé en ce que**
- la couche échangeuse d'ions (13) est d'une part directement adjacente à une première couche supplémentaire (25),
- la couche d'imprégnation (15) est d'une part directement adjacente à la couche active (14) et d'autre part directement adjacente à une deuxième couche supplémentaire (26),
- la couche échangeuse d'ions (13) est d'autre part directement adjacente à une troisième couche supplémentaire (27) qui est elle-même directement adjacente à la couche active (14),
- le matériau filtrant (12) est constitué de la couche échangeuse d'ions (13), de la couche active (14), de la couche d'imprégnation (15) et des trois couches supplémentaires (25, 26, 27).

12. Matériau filtrant selon l'une quelconque des revendications 1 à 8,
**caractérisé en ce que**
- la couche échangeuse d'ions (13) est d'une part directement adjacente à une première couche supplémentaire (25),
- la couche d'imprégnation (15) est d'une part directement adjacente à une deuxième couche supplémentaire (26),
- la couche échangeuse d'ions (13) est d'autre part directement adjacente à une troisième couche supplémentaire (27),
- la couche d'imprégnation (15) est d'autre part directement adjacente à une quatrième couche supplémentaire (28),
- la couche active (14) est d'une part directement adjacente à la troisième couche active (27) et d'autre part directement adjacente à la quatrième couche active (28),
- le matériau filtrant (12) est constitué de la couche échangeuse d'ions (13), de la couche active (14), de la couche d'imprégnation (15) et des quatre couches supplémentaires (25, 26, 27, 28).

13. Matériau filtrant selon l'une quelconque des revendications 10 à 12,
**caractérisé en ce que**
- au moins une telle couche supplémentaire (25, 26, 27, 28) est conçue en tant que couche de support qui est perméable aux particules d'une granulométrie inférieure à 1 mm, et/ou
- au moins une telle couche supplémentaire (25, 26, 27, 28) est conçue en tant que couche de filtre à particules qui est imperméable aux particules d'une granulométrie supérieure à 0,1 mm, et/ou
- la couche supplémentaire respective (25, 26, 27, 28), lorsqu'elle forme un côté amont (21) ou un côté aval (22) du matériau filtrant (12), est conçue en tant que couche de support qui est perméable aux particules d'une granulométrie inférieure à 1 mm, et/ou
- la couche supplémentaire respective (25, 26, 27, 28), lorsqu'elle ne forme ni un côté amont (21) ni un côté aval (22) du matériau filtrant (12), est conçue en tant que couche de filtre à particules qui est imperméable aux particules d'une granulométrie supérieure à 0,1 mm.

14. Élément filtrant d'air intérieur pour une installation de climatisation (1) d'un véhicule avec un corps de filtre (11) qui est formé d'un matériau filtrant (12) selon l'une quelconque des revendications précédentes.

15. Installation de climatisation (1) pour un véhicule avec un appareil de filtration d'air intérieur (3) qui présente au moins un élément filtrant d'air intérieur (4) selon la revendication 14, dans laquelle la couche échangeuse d'ions (13) est disposée en amont de la couche active (14), tandis que la couche d'imprégnation (15) est disposée en aval de la couche active (14).
